# EUROPÄISCHE PATENTSCHRIFT

(11) **EP 1 761 883 B1**
(45) Veröffentlichungstag und Bekanntmachung des Hinweises auf die Patenterteilung: **03.11.2010**
(21) Anmeldenummer: 05750586.9
(22) Anmeldetag: 16.06.2005
(51) Int. Cl.: G06K 13/073, G06K 19/16, G06K 19/077, B42D 15/10, B42D 15/00

(54) **SICHERHEITSELEMENT ZUR RF-IDENTIFIKATION**
SECURITY ELEMENT FOR RF IDENTIFICATION
ELEMENT DE SECURITE IDENTIFIABLE PAR RADIOFREQUENCE

(30) Priorität: 30.06.2004 DE 102004031879
(43) Veröffentlichungstag der Anmeldung: 14.03.2007
(73) Patentinhaber: OVD Kinegram AG, 6301 Zug (CH)
(72) Erfinder: STAUB, René, CH-6332 Hagendorn (CH); TOMPKIN, Wayne, Robert, CH-5400 Baden (CH); SCHILLING, Andreas, CH-6332 Hagendorn (CH); KROLZIG, Olaf, CH-5712 Beinwill am See (CH); PETERS, John, Anthony, CH-8804 Au (CH)
(74) Vertreter: Zinsinger, Norbert
(86) Internationale Anmeldenummer: PCT/EP2005/006453
(87) Internationale Veröffentlichungsnummer: WO 2006/002770

(56) Entgegenhaltungen:
- EP-A- 1 179 811
- US-A1- 2003 038 174
- US-A1- 2003 067 389
- US-A1- 2003 179 150
- US-B1- 6 170 880

## Beschreibung

Die Erfindung betrifft ein Sicherheitselement zur RF-Identifikation sowie ein Sicherheitsdokument, insbesondere einen Reisepass mit einem solchen Sicherheitselement.

US 4,220,956 beschreibt eine RF-Identifkationsschaltung (RF = Radio Frequency), die eine Reihe von Antennen besitzt, die mittels eines Ätzprozesses aus einem Kupferlaminat gefertigt sind. Das Kupferlaminat ist auf einem Dielektrikum aufgebracht. Da das Dielektrikum keine elektrischen Funktionen erbringt, kann es sehr dünn ausgeformt werden, wodurch sich die mechanische Flexibilität der RF-Identifikationsschaltung erhöht.

US 5,528,22 beschreibt eine RF-Identifikationsschaltung, die einen von einer Basisstation gesendeten RF-Träger zurück zur Basisstation reflektiert und hierbei dem reflektierten Signal eine zusätzliche Information gemäß eines vorprogrammierten Informationsprotokolls aufmoduliert. Die RF-Identifikationsschaltung weist eine Halbleiterschaltung mit einem Speicher und ein oder mehreren RF-Bauteilen einer RF-Schaltung auf. Die Halbleiterschaltung ist auf einem Substrat montiert. Das von der Antenne empfangene RF-Signal wird an die Halbleiterschaltung weitergeleitet. Bei dem Substrat handelt es sich um ein flexibles, nicht-leitendes Substrat. Die Antenne ist ein integraler Bestandteil des Substrats. Sie besteht aus einer 25 bis 35 µm dicken Bahn, die auf einer Polyester- oder Polyamidschicht aufgebracht ist. US 6,170, 880 B1 beschreibt ein Sicherheits element welches zwei optisch variable Elemente aufweist.

Aufgrund dieses Aufbaus hat die RF-Identifikationsschaltung eine sehr dünne und mechanisch flexible Form.

Der Erfindung liegt nun die Aufgabe zugrunde, die RF-Identifikation zu verbessern.

Diese Aufgabe wird von einem Sicherheitselement nach Anspruch 1 gelöst.

Damit ist die elektronische Schaltung optimal vor invasiven Eingriffen geschützt.

Diese Aufgabe wird weiter von einem Sicherheitsdokument mit einem derartigen Sicherheitselement gelöst.

Durch die Erfindung werden die von der elektronischen Schaltung des Sicherheitselements gespeicherten sicherheitsrelevanten Informationen zuverlässig vor Manipulation und Ausspähung geschützt. Ein "Angriff" auf die in der elektronischen Schaltung gespeicherten Daten mittels Abbildung der Schaltung und Reverse-Engineering, beispielsweise unter Verwendung kommerziell verfügbarer Methoden wie "Microproving", führen unweigerlich zur Zerstörung eines optisch variablen Elements und können leicht erkannt werden. Durch diesen zusätzlichen Schutz der Authentizität der von einer RF-Identifikationsschaltung verwalteten sicherheitsrelevanten Information wird im Vergleich zu den üblicherweise hierfür eingesetzten Verfahren wie

(asynchrone) Verschlüsselungstechnologien oder elektronische Sicherheits-Zertifikate eine erhebliche Verbesserung der Sicherheit eines RF-Identifikationsverfahrens erzielt, da zwei sehr unterschiedliche Technologien zum Schutz der Authentizität der Daten kombiniert werden und damit ein "Angriff" auf die Authentizität der Daten sehr erschwert wird.

Weitere Vorteile der Erfindung sind den Unteransprüchen zu entnehmen.

Gemäß eines bevorzugten Ausführungsbeispiels der Erfindung ist der flexible Folienkörper in dem die elektronische Schaltung umgebenden Bereich transparent ausgebildet. Manipulationen an der elektronischen Schaltung sind hierdurch besonders einfach erkennbar. Weiter ist es so möglich, dass sich für den Betrachter ein Betrachtungseindruck ergibt, der sowohl von dem die elektronische Schaltung enthaltenden Folienkörper als auch von dem ersten und/oder dem zweiten optisch variablen Element beeinflusst wird. So ist eine Integration des Betrachtungseindrucks des flexiblen Folienkörpers in den von dem ersten und/oder zweiten optisch variablen Element generierten optischen Effekt möglich, wodurch Manipulationen besonders leicht erkenntlich werden.

Es ergeben sich eine Vielzahl von Möglichkeiten, die Sicherheit der in der elektronischen Schaltung gespeicherten Daten durch zusätzliche Maßnahmen zu verbessern:
Gemäß der Erfindung ist es möglich, dass die von dem ersten optisch variablen Element und von dem zweiten optisch variablen Element generierten optischen Effekte sich ergänzende Darstellungen zeigen, so dass der Wegfall oder die Veränderung eines der beiden optisch variablen Elemente für den Betrachter sofort augenfällig wird,
oder, daß das erste und das zweite optisch variable Element sich zumindest bereichsweise überdecken. So kann sich beispielsweise ein transmissiver Bereich des ersten optisch variablen Elements und ein reflektiver Bereich des zweiten optisch variablen Elements, beispielsweise nach Art eines Mosaiks, überdecken, so dass der Wegfall eines der beiden Sicherheitselemente oder eine Veränderung des Passers bzw. der Lage und Ausrichtung eines der optisch variablen Sicherheitselemente sofort erkennbar wird.

Gemäß einer weiteren bevorzugten Ausführungsform der Erfindung werden die ersten und zweiten optisch variablen Elemente derart aufeinander abgestimmt, dass bei Überlagerung des ersten und des zweiten optisch variablen Elements ein weiterer, versteckter optischer Effekt sichtbar wird. So weist beispielsweise das zweite optisch variable Element ein Moiré-Muster und das erste optisch variable Element ein passenden Moiré-Analysator auf, so dass bei überlagerter Betrachtung des ersten und des zweiten optisch variablen Elements ein in dem Moiré-Muster verborgenes Moiré-Bild sichtbar wird. Durch entsprechende Wahl des für den Moiré-Analysator und das Moiré-Muster verwendeten Rasters können auch kleine Passerungenauigkeiten zwischen erstem und zweitem optisch variablen Element darüber entscheiden, ob das Moiré-Bild sichtbar gemacht wird, wodurch die Sicherheit der Daten weiter verbessert wird.

Weiter ist es auch möglich, versteckte optische Effekte durch die Verwendung eines transmissiven Linsenrasters für das erste optisch variable Element und einer reflektiven, diffraktiven Struktur oder eines Aufdrucks für das zweite optisch variable Element zu erzielen. Durch die Überlagerung derartiger Strukturen können versteckte Informationen sichtbar gemacht werden, die in der Abweichung von Strukturelementen der ersten und zweiten optisch variablen Elemente kodiert sind. Weitere, auffällige optische Effekte, die sich lediglich bei überlagerter Betrachtung der ersten und zweiten optisch variablen Elemente zeigen, lassen sich dadurch generieren, dass als erstes optisch variables Element ein transmissives Linsenraster und als zweites optisch variables Element ein reflektives Linsenraster oder ein Raster aus Hohlspiegel-Elementen verwendet wird. Die hierdurch generierten optischen Effekte lassen sich nur sehr schwer durch andere Technologien nachahmen.

Eine weitere bevorzugte Möglichkeit besteht darin, als erstes optisch variables Element ein transmissives Linsenraster und als zweites optisch variables Element ebenfalls ein transmissives Linsenraster zu verwenden. Auch hier hängt beispielsweise die Darstellung einer unterhalb des Sicherheitselements angeordneten Information von der passergenauen Anordnung genau dieser speziellen optisch variablen Elemente ab, so dass auch hierdurch ein besonders hohes Maß an Datensicherheit erzielbar ist.

Gemäß eines bevorzugten Ausführungsbeispiels der Erfindung ist die RF-Antenne außerhalb des Bereiches angeordnet, in dem das erste bzw. das zweite optisch variable Element vorgesehen ist. Die RF-Antenne und das erste bzw. das zweite optisch variable Element überdecken sich so nicht. Hierdurch ist es möglich, das erste und/oder das zweite optisch variable Element mit einer metallischen Reflektionsschicht zu versehen, die ansonsten zur Beeinträchtigung der Charakteristik der RF-Antenne führen würde.

Die auf dem flexiblen Folienkörper dauerhaft befestigten optischen variablen Elemente besitzen vorzugsweise eine Dicke von ca. 5 bis 15 µm, so dass eine Ablösung dieser Schichten von dem flexiblen Folienkörper, der vorzugsweise eine Dicke von 100 bis 400 µm besitzt, ohne Zerstörung der optisch variablen Elemente nicht möglich ist. Die optisch variablen Elemente werden hierbei bevorzugt mittels einer Transferfolie, beispielsweise einer Heißprägefolie, auf den flexiblen Folienkörper aufgebracht. Die dauerhafte Befestigung der optisch variablen Elemente wird hierbei beispielsweise durch einen Laminierprozess oder durch einen durch Hitze, Druck oder Strahlung vernetzbaren oder aushärtbaren Kleber erzielt.

Gemäß eines weiteren bevorzugten Ausführungsbeispiels der Erfindung grenzt die elektronische Schaltung an die Oberfläche des flexiblen Folienkörpers an und befindet sich in direkter dauerhafter Haftung mit dem ersten optisch variablen Element.

Erfindungsgemäße Sicherheitselemente werden hierbei vorzugsweise in Identifikations-Dokumente, beispielsweise Reisepässe eingebracht. Hierbei ist wesentlich, dass das erste und/oder zweite optisch variable Element auch nach Einbringen des Sicherheitselements in das Sicherheitsdokument für den Betrachter sichtbar und damit überprüfbar bleibt.

Vorzugsweise wird das Sicherheitselement hierbei in ein Sicherheitsdokument eingebracht, das ein oder mehrere durch Klebung, Bindung oder Heftung miteinander verbundene Seiten, vorzugsweise aus Papier, aufweist.

Das Sicherheitselement wird auf der Rückseite des Sicherheitsdokuments aufgebracht. In die davor liegende Seite des Sicherheitsdokuments wird ein transparentes Inspektionsfenster passergenau zum ersten optisch variablen Element eingebracht, so dass eine optische Inspektion der Authentizität der Daten möglich ist. Weiter kann das Sicherheitselement zwischen zwei Seiten des Sicherheitsdokuments eingebracht und mit diesem beispielsweise durch Klebung verbunden werden, wobei auch hier die eine und/oder die andere dieser beiden Seiten ein transparentes Inspektionsfenster aufweist, das passergenau zum ersten bzw. zweiten optisch variablen Element ausgerichtet ist.

Gemäß einem bevorzugten Ausführungsbeispiel der Erfindung weist das Sicherheitsdokument hierbei ein oder mehrere Seiten auf, die eine im Bereich der RF-Antenne des Sicherheitselements angeordnete elektrisch leitfähige Schicht aufweisen. Durch diese elektrisch leitfähige Schicht wird eine elektromagnetische Abschirmung der RF-Antenne erzielt, so dass eine Kommunikation zwischen der elektronischen Schaltung und einer Prüfeinrichtung über die RF-Antenne nur dann möglich ist, wenn das Sicherheitsdokument aufgeschlagen wird. Hierdurch wird die Sicherheit der in der elektronischen Schaltung gespeicherten, sicherheitsrelevanten Daten weiter erhöht. Ist das Dokument geschlossen, so ist auch über die Funkschnittstelle kein Zugriff auf die in der elektronischen Schaltung gespeicherten Daten möglich. Weiter werden so auch ungewollte Interferenzen zwischen verschiedenen Identifizierungssystemen unterbunden.

Die als "Abschirmfolie" wirkende Seite des Sicherheitsdokuments besteht hierbei vorzugsweise aus einem mit einer metallischen Reflektionsschicht versehenen, optisch variablen Element. Es ist jedoch auch möglich, die elektrisch leitfähige Schicht zwischen zwei benachbarte Seiten des Sicherheitsdokuments einzubringen und so vor dem Betrachter zu verbergen.

Vorzugsweise ist die elektromagnetische "Abschirmfolie" hierbei mit einem optisch variablen Element versehen, das eine ergänzende Darstellung mit dem ersten und/oder zweiten dauerhaft auf dem die elektronische Schaltung und die RF-Antenne enthaltenen flexiblen Folienkörper befestigten optisch variablen Elementen bildet. Die ergänzende Darstellung überdeckt hierbei den Bereich der elektronischen Schaltung zumindest bereichsweise, so dass hierdurch weiter überprüft werden kann, ob das erste und/oder zweite optisch variable Element im Bereich der elektronischen Schaltung beschädigt oder entfernt worden ist.

Gemäß eines weiteren bevorzugten Ausführungsbeispiels weist der Bereich der Trägerschicht des Sicherheitsdokuments, auf die das erste erfindungsgemäße Sicherheitselement aufgebracht wird, eine individualisierte Information auf, die beim Aufbringen des Sicherheitselements vom ersten und/oder zweiten optisch variablen Element des Sicherheitselements überdeckt wird. Hierdurch ist es zusätzlich möglich, die in der elektronischen Schaltung gespeicherten sicherheitsrelevanten Informationen zusätzlich durch die individualisierte Information, beispielsweise das Bild des Passinhabers, zu schützen.

Im folgenden wird die Erfindung anhand von mehreren Ausführungsbeispielen unter Zuhilfenahme der beiliegenden Zeichnungen beispielhaft erläutert.

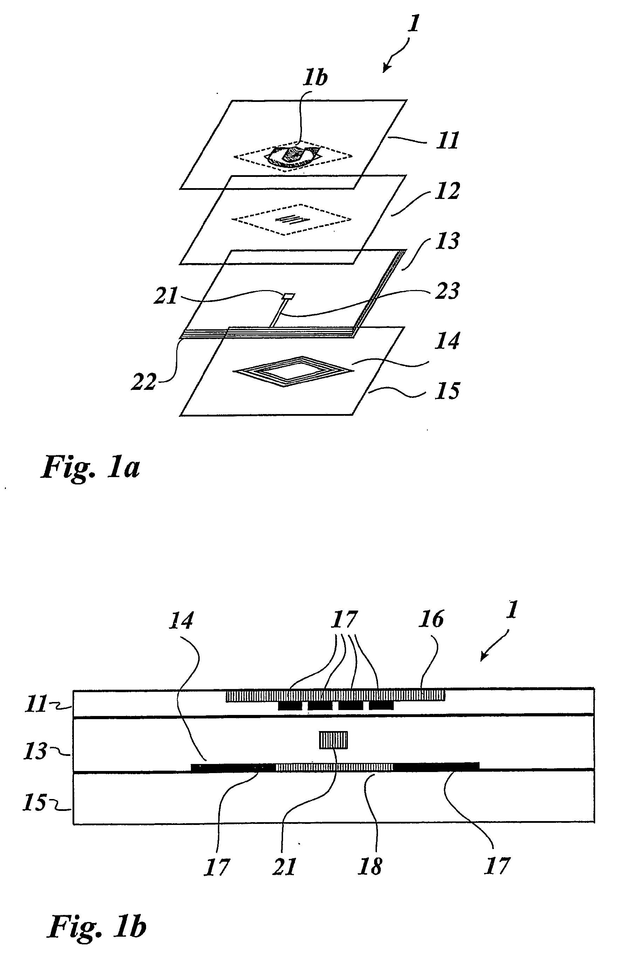

- Fig. 1 a: zeigt eine schematische Darstellung zur Verdeutlichung des Aufbaus eines erfindungsgemäßen Sicherheitselements zur RF-Identifikation.
- Fig. 1 b: zeigt eine Schnittdarstellung des Sicherheitselementes nach Fig. 1 a.
- Fig. 2a bis Fig. 2c: zeigen Darstellungen eines erfindungsgemäßen Sicherheitsdokuments.
- Fig. 3: zeigt eine Darstellung eines erfindungsgemäßen Sicherheitsdokuments für ein weiteres Ausführungsbeispiel der Erfindung.
- Fig. 4: zeigt eine Darstellung eines erfindungsgemäßen Sicherheitsdokuments für ein weiteres Ausführungsbeispiel der Erfindung.
- Fig. 5a bis Fig. 7b: zeigen schematische Darstellungen zur Verdeutlichung des Aufbaus von erfindungsgemäßen Sicherheitselementen gemäß weiterer Ausführungsbeispiele der Erfindung.

Fig. 1a und Fig. 1b zeigen ein mehrschichtiges Sicherheitselement 1 zur RF-Identifikation, das aus mehreren dauerhaft miteinander verbundenen Schichten 11, 13, 14 und 15 besteht. Zur dauerhaften Verbindung dieser Schichten können hierbei verschiedene Verfahren, bspw. Verkleben, Kaltlaminieren, Heißlaminieren, Heißprägen oder Verkleben mittels UV-härtbarem Kleber verwendet werden.

Bei der Schicht 13 handelt es sich um einen dünnen, flexiblen Folienkörper mit einer Schichtdicke von ca. 100 µm bis 400 µm. Dieser Folienkörper besteht aus einem transparenten Polyesterträger, der eine elektronische Schaltung 21, eine RF-Antenne 22 und einen Wellenleiter 23 zur Verbindung der RF-Antenne 22 mit der elektronischen Schaltung 21 aufweist.

Die elektronische Schaltung 21 besteht vorzugsweise aus einer, auf einem sehr dünnen Siliziumträger aufgebrachten, in Silizium-Technologie gefertigten integrierten Schaltung. Diese Schaltung weist vorzugsweise einen Mikroprozessor mit zugeordnetem Speicher sowie peripheren Treiberkomponenten auf, die die Kommunikation dieses Mikroprozessors über die mittels der RF-Antenne bediente Funkschnittstelle ermöglichen. Die Energieversorgung des Mikroprozessors wird hierbei ebenfalls über die RF-Antenne 22 realisiert, die die in die Antenne induzierte elektromagnetische Strahlungsenergie dem Mikroprozessor zuführt.

Der Mikroprozessor weist einen geschützten Speicherbereich auf, in dem sicherheitsrelevante Daten, bspw. biometrische Informationen eines Passinhabers (Identifizierungs-Daten oder Autorisierungsdaten oder geheime Schlüssel) gespeichert sind. Diese Daten werden vorzugsweise dazu verwendet, bei der Kommunikation des Mikroprozessors die das Sicherheitselement mit sich führende Person gegenüber der Prüfeinrichtung sicher zu identifizieren.

Weiter ist es auch möglich, dass die elektronische Schaltung 21 nicht auf der klassischen Silizium-Technologie basiert, sondern dass es sich bei dieser Schaltung um eine organische Halbleiterschaltung handelt.

Die Form und Gestaltung der Antenne 22 wird wesentlich durch die Trägerfrequenz des Identifizierungsverfahren bestimmt, für das das Sicherheitselement 1 eingesetzt wird. Die Antenne besteht hierbei vorzugsweise aus mehreren in Form einer Schleife angeordneten Leiterbahnen aus einem elektrisch leitfähigen Material. Die RF-Antenne kann hierbei aus einem dünnen, in die Schicht 13 eingegossenen oder einlaminierten Draht, aus einer auf einem Trägersubstrat in der gewünschten Antennenform aufgebrachten leitfähigen Paste oder aus einer dünnen Schicht aus einem leitfähigen Material bestehen, die entsprechend der gewünschten Antennenstruktur durch positive/negative Ätzung (Schattenmasken), einen entsprechenden Aufdruck oder Ablation, bspw. Laserablation, strukturiert ist. Hierbei ist es auch möglich, dass die Antenne 22 aus einem transparenten leitfähigen Material, bspw. Indium-Zinn-Oxid, Polyanilin und/oder leitfähigen Polymeren besteht.

Die Schichten 11, 12 und 14 haben jeweils eine Dicke von etwa 10 bis 50 µm.

Die Schicht 11 besteht aus der Transferlage einer Prägefolie, die eine Schutzlackschicht, eine Replizierlackschicht mit abgeformter beugungsoptisch aktiver Reliefstruktur, eine partielle Reflexionsschicht und eine Klebeschicht aufweist.

Die Schutzlackschicht hat vorzugsweise eine Dicke von 1 bis 2 µm. Die Replizierlackschicht besteht vorzugsweise aus einem thermoplastischen oder vernetzten Polymer, in das mittels eines Replizierwerkzeuges unter Einwirkung von Hitze und Druck in dem Bereich eines optisch variablen Elements 16 eine diffraktive Reliefstruktur geformt wird, die bspw. als Hologramm oder Kinegram^{®} wirkt. Hierzu wird beispielsweise ein thermoplastischer Replizierlack mittels einer Tiefdruckrasterwalze vollflächig auf die Lackschicht aufgebracht, getrocknet und sodann die diffraktive Struktur in den oben bezeichneten Bereichen mittels einer Prägematrize eingeprägt. Weiter ist es auch möglich, dass als Replizierlack ein strahlenvernetzbarer Lack auf der Schutzlackschicht aufgebracht wird und die diffraktive Struktur sodann mittels UV-Replikation in die Replizierlackschicht abgeformt wird.

Sodann wird die (strukturierte) Reflexionsschicht auf die Replizierlackschicht aufgebracht. Hierzu wird die Reflexionsschicht, bei der es sich vorzugsweise um eine reflektive Metallschicht, bspw. aus Kupfer, Silber, Aluminium oder Gold handelt, vollflächig auf die Replizierlackschicht aufgebracht und sodann mittels Positiv/Negativ-Ätzen oder mittels Ablation bereichsweise wieder entfernt, so dass sich die gewünschte strukturierte Reflexionsschicht ergibt. So verbleibt bspw. in dem in Fig. 1a gezeigten Bereich eine unter Umständen fein strukturierte Metallisierung, wohingegen in dem übrigen Bereich die Schicht 11 transparent ist.

Weiter ist es auch möglich, dass anstelle einer opaken Reflexionsschicht lediglich eine die Reflexion verstärkende optische Trennschicht (partiell) auf die Replizierlackschicht aufgebracht wird. Bei einer derartigen optischen Trennschicht handelt es sich vorzugsweise um eine HRI- oder LRI-Schicht (HRI = High Refraction Index, LRI = Low Refraction Index), die bspw. aus einer dünnen aufgedampften Schicht aus einem Dielektrikum oder aus einer dünnen und damit transmissiven Metallschicht besteht.

Weiter ist es möglich, auf die Replizierlackschicht ein reflektives oder transmissives Dünnfilmschichtsystem aufzubringen, das bspw. Farbverschiebungen mittels Interferenz erzeugt oder die Reflexion erhöht, so dass das optisch variable Element 16 (partiell) ein transmissives, beugungsoptisch wirksames Element zeigt. So kann auf die Replizierlackschicht bspw. ein Dünnfilmschichtsystem bestehend aus ZnS/MgF/ZnS oder TiO₂/SiO₂/TiO₂ aufgebracht werden. Auch der Einsatz von Dünnfilmschichtsystemen bestehend aus sehr dünnen Metallschichten, bspw. AL/MgF/Al ist möglich.

In dem Ausführungsbeispiel nach Fig. 1a wird die Transferlage der Transferfolie vor Aufbringen auf den Folienkörper 13 weiter in den in Fig. 1b gezeigten Bereichen mit einem partiellen Aufdruck 17 versehen. Der Aufdruck 17 wird hierbei vorzugsweise in dem Bereich der Transferlage vorgenommen, in dem die Transferlage transparent oder teiltransparent ist, da dort keine opake Reflexionsschicht vorgesehen ist. Der Aufdruck 17 enthält hierbei vorzugsweise ein Effektpigment, bspw. ein Interferenzschichtpigment oder ein cholesterisches Flüssigkristallpigment.

Alternativ zu der Schicht 11 kann auf den Folienkörper 13 auch die Schicht 12 aufgebracht werden. Die Schicht 12 ist wie die Schicht 11 aufgebaut, mit dem Unterschied, dass die Schicht 12 vollständig transparent ist und aus der Replizierlackschicht mit eingeprägter diffraktiver Struktur der Schicht 11 sowie aus einer transparenten optischen Trennschicht (wie oben beschrieben) besteht, so dass der Aufdruck 17 gut erkennbar ist.

Wie in Fig. 1 a gezeigt, wird die Schicht 11 oder die Schicht 12 derart auf den Folienkörper 13 aufgebracht, dass das in dieser Schicht enthaltene optisch variable Element, bspw. das optisch variable Element 16, den Bereich des Folienkörpers 13, in dem die elektronische Schaltung 21 angeordnet ist, zumindest bereichsweise überdeckt.

Die Schicht 14 ist wie die Schicht 11 ausgestaltet, wobei diese in einem Bereich 17 einen reflektiven optisch variablen Effekt und in einem Bereich 18 einen transmissiven optisch variablen Effekt zeigt. Die Schicht 17 besteht so aus der Transferlage einer Transferfolie, die in der in Fig. 1a gezeigten Form auf die Trägerschicht 15 bspw. mittels eines Heißprägeverfahrens aufgebracht ist. Die Trägerschicht 15 besteht hier bspw. aus einer PET-, PVC-, ABS-, PC-Folie mit einer Dicke von 12 µm. Nach Aufbringen der Schicht 14 auf die Trägerschicht 15 wird der von den Schichten 14 und 15 gebildete Folienkörper durch eines der oben bezeichneten Verfahren dauerhaft mit dem Folienkörper 13 in der in den Fig. 1 a und 1 b gezeigten Passerungen zu der Schicht 11 und der elektronischen Schaltung 21 dauerhaft verbunden.

Bei dem Sicherheitselement 1 sind für den Betrachter demnach sowohl die von dem optisch variablen Element 16 wie auch die von dem von der Schicht 14 bereitgestellten Element optisch variablen Element generierten optischen Effekte als auch die elektronische Schaltung 21 erkennbar, so dass die Authentizität der elektronischen Schaltung leicht überprüft werden kann.

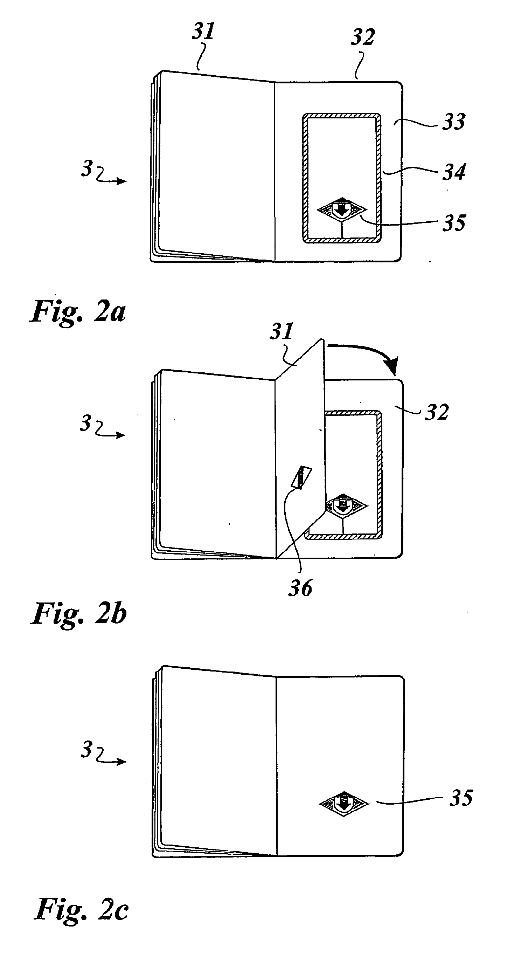

Das Einbringen eines nach den Figuren Fig. 1a und Fig. 1b hergestellten Sicherheitselements 33 in ein Sicherheitsdokument 3 wird anhand der Fig. 2a bis Fig. 2c verdeutlicht.

Das Sicherheitselement 33 besteht, wie oben aufgezeigt, aus einem mehrschichtigen, transparenten flexiblen Folienkörper, der im Bereich der elektronischen Schaltung ein optisch variables Element 35 sowie die (opaken) Leiterbahnen einer Antenne 34 zeigt. Das Sicherheitsdokument 3 weist mehrere mittels Klebung, Heftung oder Bindung miteinander verbundene Seiten auf. Das Sicherheitselement 33 wird nun auf die letzte Seite des Sicherheitsdokuments 3, der Seite 32, aufgebracht und mit dieser durch eine der oben beschriebenen Verfahren dauerhaft verbunden.

Sodann wird in einem nächsten Schritt (Fig. 2b) ein transparentes Inspektionsfenster in die benachbarte Seite 31 des Dokuments 3, bspw. durch einen Schneide- oder Stanzvorgang, eingebracht.

Sodann wird die Seite 31 mit dem Sicherheitselement 32 dauerhaft durch eines der oben beschriebenen Verfahren verbunden, so dass für den Betrachter lediglich noch das optisch variable Element 35 durch das Inspektionsfenster 36 sichtbar bleibt (Fig. 2c).

Auf diese Weise bleibt das optisch variable Element und der, die elektronische Schaltung enthaltene Teil des Sicherheitselements für den Betrachter sichtbar, so dass dieser die Authentizität der in der elektronischen Schaltung gespeicherten Daten überprüfen kann, wohingegen die verbleibende Antennenstruktur verdeckt wird und so für den Betrachter unsichtbar wird.

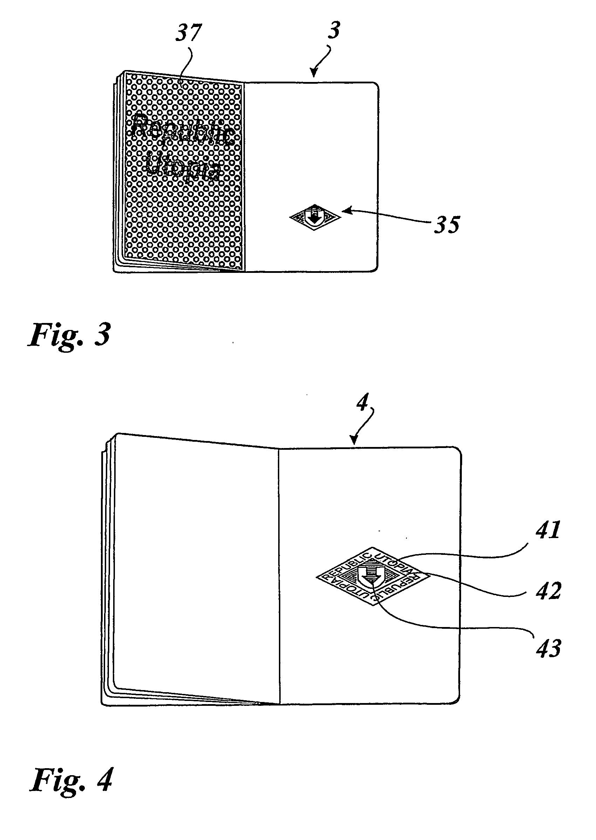

Bevorzugt weist das Sicherheitsdokument 3 hierbei noch ein oder mehrere Seiten auf, die über eine dünne, elektrisch leitfähige Schicht verfügen, die zumindest im Bereich der Antenne 34 angeordnet ist. So zeigt Fig. 3 eine Seite 37 des Sicherheitsdokuments 3, das eine derartige metallisierte Folie aufweist, die die Antenne des Sicherheitselementes 33 wie oben beschrieben abschirmt, so dass eine Kommunikation mit der Elektronik des Sicherheitselementes 33 über die von der Antenne bereitgestellte Funkschnittstelle lediglich dann möglich ist, wenn das Sicherheitsdokument 3 aufgeschlagen wird.

Die Seite 37 kann hierbei aus einer wie in Fig. 3 gezeigten partiellen metallisierten Folie bestehen, die auch weiter noch ein oder mehrere optisch variable Elemente, bspw. ein Hologramm oder Kinegram^{®}, aufweisen kann.

Fig. 4 zeigt ein Sicherheitsdokument 4, bei dem das Sicherheitselement zwischen zwei Seiten des Sicherheitsdokuments 4 eingebracht und mit diesen verklebt ist und, wie bereits oben beschrieben, lediglich ein Teil des Sicherheitselements durch ein Inspektionsfenster sichtbar bleibt.

In einem zentralen Bereich 43 bedeckt ein optisch variables Element den Bereich der elektronischen Schaltung. In einem peripheren Bereich 42, in dem die Antenne angeordnet ist, ist ein weiteres optisch variables Element 41, bestehend aus einem Sicherheitsdruck und einer diffraktiven Folie, vorgesehen, das den Bereich überdeckt.

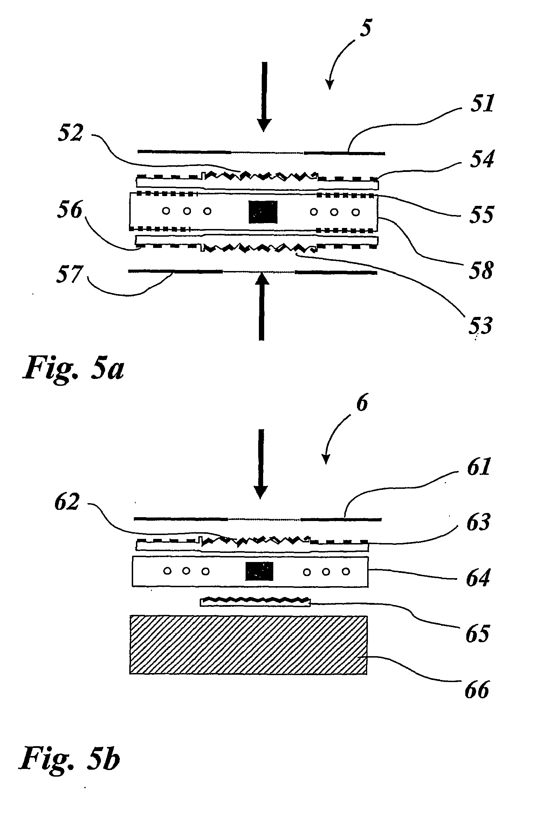

Fig. 5a zeigt eine schematische Darstellung eines zwischen zwei Seiten 51 und 57 eingebrachten Sicherheitselementes 5. Wie in Fig. 5a dargestellt, kann dieses Sicherheitselement durch zwei gegenüberliegende Inspektionsfenster betrachtet und so von beiden Seiten inspiziert werden.

Der transparente und flexible Folienkörper 58, in den, wie in Fig. 5a angedeutet, die elektronische Schaltung sowie die RF-Antenne integriert ist, ist beidseitig im Bereich der RF-Antenne mit einem Sicherheitsaufdruck 55 versehen. Auf die eine Oberfläche des Folienkörpers 58 ist eine Transferlage einer Transferfolie aufgebracht, die im Bereich der elektronischen Schaltung ein partiell transmissives, beugungsoptisch wirkendes optisch variables Element 52 zeigt. In dem dieses optisch variable Element umgebenden Bereich ist die Transferlage sodann anschließend mit einem Sicherheitsdruck 54 überdruckt.

Auf der Rückseite wird in analoger Weise eine Transferlage einer Transferfolie aufgebracht und anschließend überdruckt, so dass sich dort ein partiell transmissives, optisch variables Element 53 sowie ein dieses umgebender Sicherheitsaufdruck 56 zeigt. Vorzugsweise überlagern sich hier transmissive Bereiche des optisch variablen Elements 52 und des optisch variablen Elements 53, so dass sich in Durchlichtbetrachtung ein anderer Effekt als bei Auflichtbetrachtung zeigt. Weiter ist es auch möglich, dass sich reflektive und transmissive Bereiche der optisch variablen Elemente 52 und 53 überlagern, so dass sich der jeweils dem Betrachter von der Vorderseite und von der Rückseite zeigende Effekt jeweils durch die wechselseitige Überlagerung von transmissiven und reflektiven Bereichen der optisch variablen Elemente 52 und 53 ergibt.

Auf den Sicherheitsüberdruck 54 und 56 könnte auch verzichtet werden.

Fig. 5b zeigt ein durch eine Seite 61 mit einem Inspektionsfenster betrachtetes und auf ein Substrat 66 aufgebrachtes Sicherheitselement 6. Auf einen flexiblen Folienkörper 64 mit integrierter RF-Antenne und elektronischer Schaltung ist die Übertragungslage einer Transferfolie aufgebracht, die im Bereich der elektronischen Schaltung ein optisch variables Element 62 aufweist, das mit einem optionalen Sicherheitsüberdruck 63 umgeben ist. Auf die gegenüberliegende Oberfläche des Folienkörpers 64 ist die Übertragungslage einer Transferfolie aufgebracht, die ein optisch variables Element 65 enthält. Bei dem optisch variablen Element 62 handelt es sich um ein teiltransparentes optisch variables Element. Bei dem optisch variablen Element 65 handelt es sich um ein reflektives optisch variables Element, bspw. um eine mit einer Reflexionsschicht versehene beugungsoptisch wirkende Struktur oder Dünnfilmstruktur. Für den Betrachter zeigt sich so die elektronische Schaltung vor dem Hintergrund der von dem optisch variablen Element 65 generierten optischen Effekte, die weiter zusätzlich von dem von dem optisch variablen Element 62 generierten optischen Effekte überlagert sind.

Weiter ist es auch möglich, dass das Sicherheitselement nicht mit einer Seite des Sicherheitsdokuments beispielsweise durch Klebung verbunden wird, sondern dass das Sicherheitselement einen in Form einer Seite ausgeformten flexiblen mehrschichtigen Folienkörper bildet, der beispielsweise durch Heftung, Bindung oder Verklebung als Seite des Sicherheitsdokuments in das Sicherheitsdokument eingebracht ist. Ein derartiges Sicherheitselement kann, wie bereits oben beschrieben, bereichsweise mit einem Überdruck versehen sein, der lediglich den Bereich eines Inspektionsfensters zur Überprüfung der ersten und/oder zweiten optisch variablen Elemente freilässt.

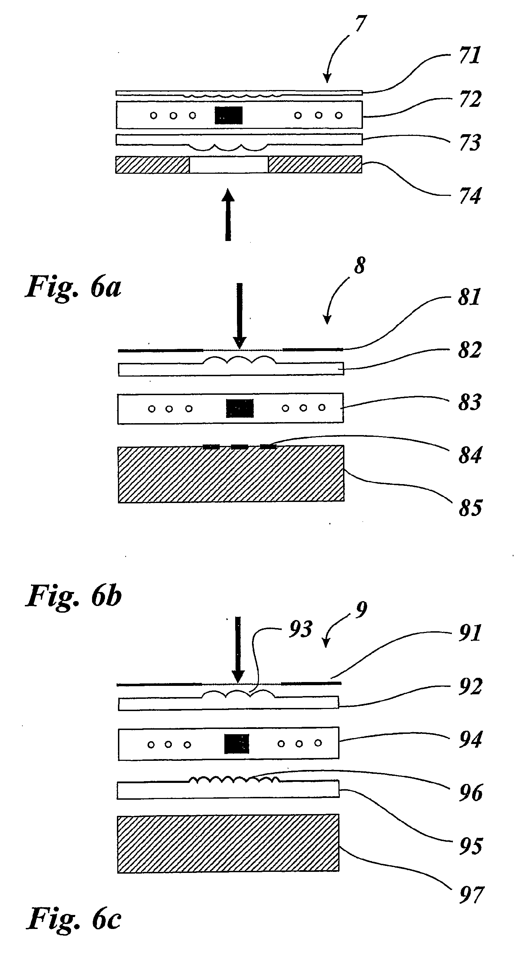

Die Fig. 6a bis Fig. 6c zeigen Sicherheitselemente 7, 8 und 9, bei denen der Bereich der elektronischen Schaltung eines Folienkörpers 72, 83 und 94 auf der einen Seite jeweils von einem optisch variablen Element überlagert ist, das ein Mikrolinsenraster aufweist.

Ein derartiges Mikrolinsenraster besteht vorzugsweise aus einer Trägerschicht, in die eine refraktive, makroskopische Linsenstruktur mittels eines entsprechenden Prägewerkzeugs abgeformt ist. Es ist jedoch auch möglich, dass das Linsenraster mittels einer beugungsoptischen Reliefstruktur generiert wird, die beugungsoptisch den Effekt mehrerer benachbart angeordneter konvexer Linsen beugungsoptisch generiert.

Durch ein derartiges Mikrolinsenraster wird ein genau definierter Bereich, der auf der anderen Seite der flexiblen Folienkörper 72, 83 und 94 angeordneten optisch variablen Elemente 71, 84 und 96 vergrößert und deren Überlagerung dem Betrachter gezeigt. So ist es beispielsweise möglich, eine vergrößerte Darstellung eines repetitiven, auf der gegenüberliegenden Seite angeordneten Musters bei entsprechender Ausrichtung des Linienraster zur repetitiven Struktur zu generieren.

Gemäß dem Ausführungsbeispiel nach Fig. 6a ist das Sicherheitselement 7 auf einem Substrat 74 angeordnet, das im Bereich des Mikrolinsenrasters 73 ein Inspektionsfenster besitzt. Auf der gegenüberliegenden Oberfläche des Folienkörpers 72 ist ein reflektives, beugungsoptisch wirkendes optisch variables Element 71 angeordnet. Entsprechend der Ausrichtung des optisch variablen Elements 71 zu dem Linienraster 73 zeigt sich nun für den Betrachter ein ansonsten versteckter optischer Effekt, der sich aus der Phasenlage der Bereiche des optisch variablen Elements 71 zu dem Linsenraster ergibt.

Gemäß dem Ausführungsbeispiel nach Fig. 6b wirkt das Linsenraster 82 als Moiré-Analysator für ein auf ein Substrat 85 aufgedrucktes Moiré-Bild 84. Bei entsprechender passgenauer Ausrichtung des Linsenrasters 82 zu dem Moire-Muster des Aufdrucks 84 zeigt sich ein ansonsten verborgenes Moiré-Bild.

Ein Moiré-Muster ist hierbei ein sich wiederholendes, strukturbildendes Muster, das bei Überlagerung mit oder in Betrachtung durch ein weiteres, sich wiederholendes, strukturbildendes Muster, das als Moiré-Analysator wirkt, ein neues Muster, nämlich das Moiré-Bild, zeigt, das in dem Moiré-Muster versteckt ist. Im einfachsten Fall ergibt sich dieser Moiré-Effekt aus Überlagerung dunkler und heller Streifen, wobei in Bereichen, in denen die dunklen Streifen des Moiré-Musters und des Moiré-Analysators übereinander liegen, heller erscheint, als in Bereichen, in denen die dunklen Streifen des Moiré-Musters und des Moiré-Analysators nebeneinander liegen. Neben einem linearen Linienraster ist es auch möglich, dass die Linien des Linienrasters gekrümmte Bereiche aufweisen und beispielsweise wellenförmig oder kreisförmig angeordnet sind. Auch in diesem Fall kann das Moiré-Bild durch eine entsprechende bereichsweise Phasenverschiebung des gekrümmten Linienrasters kodiert werden. Weiter ist es auch möglich, ein auf zwei ineinander verdrehten Linienrastern aufbauendes Moiré-Muster zu verwenden. Die Dekodierung des Moiré-Bildes in einem derartigen Linienraster erfolgt ebenfalls durch eine bereichsweise Phasenverschiebung des Linienrasters, wobei sich in einem derartigen Moiré-Muster zwei verschiedene Moiré-Bilder kodieren lassen. Wird so die Ausrichtung des Moiré-Analysators zum Moiré-Bild verändert, so wird anstelle eines ersten gewünschten Bildes ein zweites Bild, beispielsweise ein Warnhinweis, erkennbar.

Fig. 6c zeigt nun die Kombination des Mikrolinsenrasters 93 mit einem reflektiven Mikrolinsenraster 96. Ein derartiges reflektives Mikrolinsenraster wird durch die Beschichtung eines wie oben dargestellt gefertigten Mikrolinsenrasters mit einer reflektiven Schicht, beispielsweise einer dünnen Metallschicht, gefertigt. Anstelle eines derartigen reflektiven Mikrolinsenrasters kann das optisch variable Element 95 auch ein oder mehrere, vorzugsweise an einem Raster ausgerichtete konkave Spiegelelemente aufweisen, die, wie bereits oben in Bezug auf das Linsenraster dargelegt, als makroskopische refraktive oder als diffraktive Hohlspiegelelemente realisiert sein können. Durch die Überlagerung derartiger diffraktiver Elemente lassen sich spezielle optische Effekte erzeugen, die mittels anderer Technologien nur sehr schwer nachgeahmt werden können.

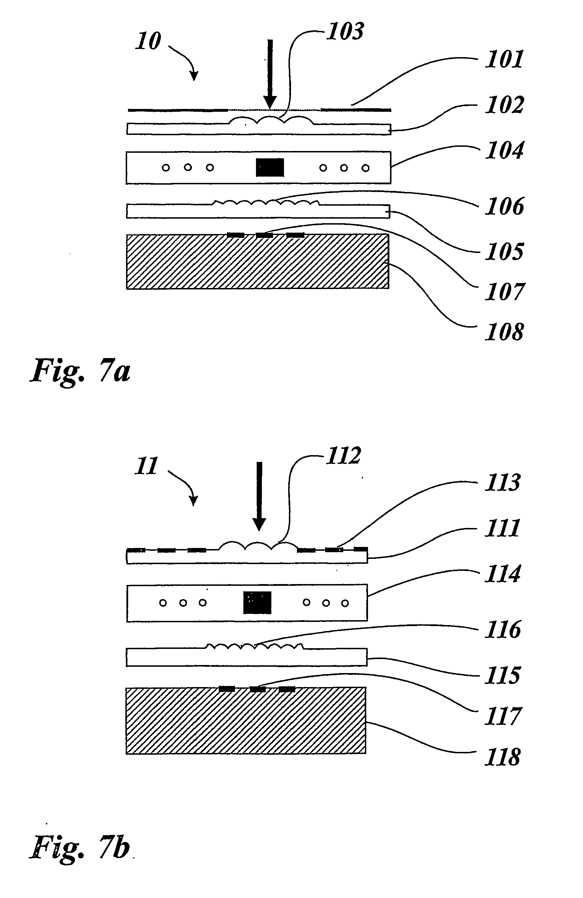

Fig. 7a zeigt ein Sicherheitselement 10, welches auf die Oberfläche eines Substrats 108 eines Sicherheitsdokuments aufgebracht ist und von einer Seite 101 dieses Sicherheitsdokuments bereichsweise abgedeckt ist. Auf der einen Oberfläche eines die RF-Antenne sowie eine elektronische Schaltung enthaltenden flexiblen Folienkörpers 104 ist ein optisch variables Element 102 und auf der gegenüberliegenden Oberfläche ein optisch variables Element 105 dauerhaft mittels eines der oben bezeichneten Verfahren befestigt. Beide optisch variablen Elemente 102 und 105 weisen, wie in Fig. 7a angedeutet, ein transmissives Makrolinsenraster 103 bzw. 106 auf. Das Substrat 108 ist vor dem Aufbringen des Sicherheitselementes 10 mit einem Sicherheitsaufdruck 107 bedruckt, der im Bereich der elektronischen Schaltung 104 des Sicherheitselementes vorgesehen wird. Der Betrachtungseindruck, der sich dem Betrachter bei Inspektion des Sicherheitselements 10 bietet, wird so von der Darstellung des Sicherheitsaufdruckes 107, von der Ausrichtung und der Brennweite der Mikrolinsen der optisch variablen Elemente 103 und 105, von der Beabstandung der optisch variablen Elemente 102 und 105, sowie von der relativen Positionierung der optisch variablen Elemente 103 und 106 und des Sicherheitsaufdrucks 107 zueinander bestimmt. Wird eine dieser Komponenten verändert, beispielsweise der Abstand der optisch variablen Elemente 102 und 105, die Positionierung der optisch variablen Elemente 102 und 105 zueinander oder die Positionierung dieser optisch variablen Elemente zu dem Sicherheitsaufdruck 107, so ergibt sich ein anderer Betrachtungseindruck bei der Inspektion des Sicherheitselements 10. Weiter ist es hier auch möglich, wie bereits in Bezug auf Fig. 6b beschrieben, ein verstecktes Sicherheitsmerkmal in den Sicherheitsaufdruck 107 sowie in die Positionierung der Mikrolinsenraster 103 und 106 zu kodieren, das nur bei überlagerter Betrachtung und entsprechender Ausrichtung der Mikrolinsenraster 103 und 106 und des Sicherheitsaufdrucks 107 entsteht. Die Kodierung kann hierbei beispielsweise nach Art eines Moiré-Bildes durch eine Phasenverschiebung basierend auf einem gemeinsamen Linienraster, erfolgen.

Der besondere Vorteil dieses Ausführungsbeispiels der Erfindung liegt darin, dass jegliche Manipulation der Vielzahl der für den Betrachtungseindruck relevanten Parameter sehr gut erkennbar ist und sich durch die von den optisch variablen Elementen 102 und 105 gebildete diffraktive Optik ein markanter optisch variabler Effekt ergibt, der mittels anderer Methoden nur sehr schwer nachzuahmen ist.

Fig. 7b zeigt ein optisches Sicherheitselement 11, das aus einem flexiblen Folienkörper 114 mit einer RF-Antenne und einer elektronischen Schaltung sowie einem auf der einen Oberfläche des Folienkörpers 114 aufgebrachten optisch variablen Element 111 mit einem Mikrolinsenra.ster 112 und einem auf die gegenüberliegende Oberfläche des Folienkörpers 114 aufgebrachten optisch variablen Element 115 mit einem Mikrolinsenraster 116 besteht. Das Sicherheitselement 11 wird auf einem mit einem Sicherheitsaufdruck 117 versehenen Substrat 118 eines Sicherheitsdokuments aufgebracht und zeigt die bereits in Bezug auf Fig. 7a beschriebenen Effekte. Im Gegensatz zu dem Ausführungsbeispiel nach Fig. 7a wird das Sicherheitselement 11 jedoch nicht von einer Seite des Sicherheitsdokuments mit einem Bereich der elektronischen Schaltung angeordneten Inspektionsfenster bedeckt, sondern ist seinerseits mit einem Sicherheitsaufdruck 113 versehen, der ein Inspektionsfenster im Bereich des Mikrolinsenrasters 112 offen lässt und den Bereich der RF-Antenne des Folienkörpers 114 bedeckt.

## Patentansprüche

1. Sicherheitselement zur RF-Identifikation, wobei das Sicherheitselement einen flexiblen Folienkörper (13, 58, 64, 83, 94, 104, 114) aufweist, in den eine elektronische Schaltung (21), die zur Speicherung von sicherheitsrelevanten Informationen eingerichtet ist, und eine RF-Antenne (22) integriert ist, die mit der elektronischen Schaltung (21) verbunden ist und zur berührungslosen Kommunikation der elektronischen Schaltung mit einer Prüfeinrichtung dient, wobei
auf einer Oberfläche des flexiblen Folienkörpers (13, 58, 64, 72, 83, 94, 104, 114) ein erstes optisch variables Element (11, 12, 54, 63, 73, 82, 92, 102, 111) dauerhaft befestigt ist, das den Bereich des flexiblen Folienkörpers, in dem die elektronische Schaltung angeordnet ist, zumindest bereichsweise überdeckt, wobei auf der anderen Oberfläche des flexiblen Folienkörpers (13, 58, 64, 72, 94, 104, 114) ein zweites optisch variables Element (14, 56, 65, 71, 84, 95, 105, 115) dauerhaft befestigt ist,
a) die von dem ersten optisch variablen Element und von dem zweiten optisch variablen Element generierten optischen Effekte sich ergänzende Darstellungen zeigen oder
b) sich das erste und das zweite optisch variable Element (11, 12, 14, 54, 58, 63, 65, 71, 73, 92, 95, 102, 105, 111, 115) zumindest bereichsweise überdecken.

2. Sicherheitselement nach Anspruch 1,
**dadurch gekennzeichnet,**
**dass** die elektronische Schaltung an die Oberfläche des flexiblen Folienkörpers angrenzt und dass das erste optisch variable Element
zumindest bereichsweise direkt dauerhaft auf der elektronischen Schaltung befestigt ist.

3. Sicherheitselement nach Anspruch 1 oder Anspruch 2,
**dadurch gekennzeichnet,**
**dass** der flexible Folienkörper (13, 58, 64, 72, 83, 94, 104, 114), in dem die elektronische Schaltung (21) umgebenden Bereich transparent ist.

4. Sicherheitselement nach einem der Ansprüche 1 bis 3,
**dadurch gekennzeichnet,**
**dass** sich in Fall a) das erste und das zweite optisch variable Element (11, 12, 14, 54, 58, 63, 65, 71, 73, 92, 95, 102, 105, 111, 115) weiterhin zumindest bereichsweise überdecken.

5. Sicherheitselement nach einem der Ansprüche 1 bis 3,
**dadurch gekennzeichnet,**
**dass** sich in Fall b) transmissive Bereiche des ersten optisch variablen Elements (63, 73, 92) und reflektive Bereiche des zweiten optisch variablen Elements (65, 71, 95) überdecken.

6. Sicherheitselement nach Anspruch 4,
**dadurch gekennzeichnet,**
**dass** sich transmissive Bereiche des ersten optisch variablen Elements (63, 73, 92) und reflektive Bereiche des zweiten optisch variablen Elements (65, 71, 95) überdecken.

7. Sicherheitselement nach einem der Ansprüche 1 bis 3,
**dadurch gekennzeichnet,**
**dass** in Fall b) durch Überlagerung des ersten und des zweiten optisch variablen Elements (71, 73, 93, 95, 102, 105, 111, 115) ein weiterer versteckter optischer Effekt sichtbar wird.

8. Sicherheitselement nach Anspruch 4,
**dadurch gekennzeichnet,**
**dass** durch Überlagerung des ersten und des zweiten optisch variablen Elements (71, 73, 93, 95, 102, 105, 111, 115) ein weiterer versteckter optischer Effekt sichtbar wird.

9. Sicherheitselement nach einem der Ansprüche 7 oder 8,
**dadurch gekennzeichnet,**
**dass** das erste optisch variable Element einen Moiré-Analysator und das zweite optisch variable Element ein Moiré-Muster aufweisen.

10. Sicherheitselement nach einem der Ansprüche 7, 8 oder 9,
**dadurch gekennzeichnet,**
**dass** das erste optisch variable Element (73) ein transmissives Linsenraster aufweist, und das zweite optisch variable Element (71) eine reflektive, diffraktive Struktur oder einen Aufdruck aufweist.

11. Sicherheitselement nach einem der Ansprüche 7 bis 10,
**dadurch gekennzeichnet,**
**dass** das erste optisch variable Element (92) ein transmissives Linsenraster aufweist und das zweite optisch variable Element (95) ein reflektives Linsenraster aufweist.

12. Sicherheitselement nach einem der Ansprüche 7 bis 11,
**dadurch gekennzeichnet,**
**dass** das erste optisch variable Element (102, 111) ein erstes transmissives Linsenraster und das zweite optisch variables Element (105, 115) ein zweites transmissives Linsenraster aufweist.

13. Sicherheitselement nach einem der vorhergehenden Ansprüche,
**dadurch gekennzeichnet,**
**dass** das erste optisch variable Element (54, 63) eine partielle Reflektionsschicht und eine Replizierlackschicht aufweist, in die eine beugungsoptisch aktive Reliefstruktur (52, 62) abgeformt ist.

14. Sicherheitselement nach einem der vorhergehenden Ansprüche,
**dadurch gekennzeichnet,**
**dass** das erste optisch variable Element einen transmissiven
beugungsoptischen Effekt erzeugt.

15. Sicherheitselement nach einem der vorhergehenden Ansprüche,
**dadurch gekennzeichnet,**
**dass** das erste und/oder das zweite optisch variable Element (11, 12, 14) eine metallische Reflektionsschicht aufweist und dass die RF-Antenne (22) außerhalb des Bereiches angeordnet ist, in dem das erste bzw. das zweite optisch variable Element vorgesehen ist und sich die RF-Antenne und das erste bzw. zweite optisch variable Element sich so nicht überdecken.

16. Sicherheitselement nach einem der vorhergehenden Ansprüche,
**dadurch gekennzeichnet,**
**dass** das erste und/oder das zweite optisch variable Element (54, 56, 63) ein oder mehrere, vorzugsweise ein Effektpigment enthaltende Druckschichten aufweisen.

17. Sicherheitselement nach einem der vorhergehenden Ansprüche,
**dadurch gekennzeichnet,**
**dass** das erste und/oder das zweite optisch variable Element ein oder mehrere Dünnfilmschichten zur Erzeugung von blickwinkelabhängigen Farbverschiebungen mittels Interferenz aufweisen.

18. Sicherheitsdokument, Insbesondere Reisepass, mit einem Sicherheitselement nach einem der vorhergehenden Ansprüche.

19. Sicherheitsdokument nach Anspruch 18,
**dadurch gekennzeichnet,**
**dass** das Sicherheitsdokument ein oder mehrere Seiten (37) aufweist, die eine im Bereich der RF-Antenne des Sicherheitselements (33) angeordnete elektrisch leitfähige Schicht zur elektromagnetischen Abschirmung der RF-Antenne aufweisen.

20. Sicherheitsdokument nach Anspruch 19,
**dadurch gekennzeichnet,**
**dass** ein oder mehrere der, eine im Bereich der RF-Antenne des Sicherheitselements angeordnete, elektrische leitfähige Schicht aufweisenden Seiten mit einem dritten optisch variablen Element versehen sind, das eine ergänzende Darstellung zu dem ersten und/oder zweiten optisch variablen Element zeigt und/oder das erste oder das zweite optisch variable Element zumindest bereichsweise überdeckt.

21. Sicherheitsdokument nach einem der Ansprüche 18 bis 20,
**dadurch gekennzeichnet,**
**dass** das Sicherheitselement (33) auf die Rückseite (32) des Sicherheitsdokuments (3) aufgebracht ist und in die anliegende Seite (31) des Sicherheitsdokuments ein transparentes Inspektionsfenster (36) passergenau zum ersten optisch variablen Element eingebracht ist.

22. Sicherheitsdokument nach Anspruch 18,
**dadurch gekennzeichnet,**
**dass** das Sicherheitselement zwischen zwei Seiten des Sicherheitsdokuments eingebracht und mit diesem verklebt ist, wobei in die eine und die andere dieser Seiten ein transparentes Inspektionsfenster
passergenau zum ersten oder zweiten optisch variablen Element eingebracht ist.

23. Sicherheitsdokument nach Anspruch 18,
**dadurch gekennzeichnet,**
**dass** das Sicherheitselement einen flexiblen Folienkörper in Form einer Seite des Sicherheitsdokuments bildet, der in das Sicherheitsdokument als Seite eingenäht ist.

24. Sicherheitsdokument nach einem der Ansprüche 18 bis 23,
**dadurch gekennzeichnet,**
**dass** das Sicherheitselement (11) auf einer Seite (18) des Sicherheitsdokuments aufgebracht ist und im Bereich der RF-Antenne mit einem Aufdruck (113) überdruckt ist.

25. Sicherheitsdokument nach einem der Ansprüche 18 bis 24,
**dadurch gekennzeichnet,**
**dass** das erste und/oder das zweite optisch variable Element (82, 102, 105, 111, 115) eine, auf einer Seite (85, 108, 118) des Sicherheitsdokuments aufgebrachte individualisierte Information überdecken.

## Claims

1. Security element for RF identification, wherein the security element has a flexible sheet body (13, 58, 64, 83, 94, 104, 114), into which an electronic circuit (21), which is adapted for storing security-relevant information, and an RF antenna (22), which is connected to the electronic circuit (21) and serves for the contactless communication of the electronic circuit with a test device, are integrated, wherein
a first optically variable element (11, 12, 54, 63, 73, 82, 92, 102, 111) is permanently attached to a surface of the flexible sheet body (13, 58, 64, 72, 83, 94, 104, 114), which first optically variable element (11, 12, 54, 63, 73, 82, 92, 102, 111) at least regionally overlaps that region of the flexible sheet body in which the electronic circuit is arranged, wherein a second optically variable element (14, 56, 65, 71, 84, 95, 105, 115) is permanently attached to the other surface of the flexible sheet body (13, 58, 64, 72, 94, 104, 114), **characterized in that**
a) the optical effects generated by the first optically variable element and by the second optically variable element display representations which complement each other or
b) the first and the second optically variable element (11, 12, 14, 54, 58, 63, 65, 71, 73, 92, 95, 102, 105, 111, 115) at least regionally overlap.

2. Security element according to Claim 1, **characterized in that** the electronic circuit adjoins the surface of the flexible sheet body, and **in that** the first optically variable element is, at least regionally, permanently attached directly to the electronic circuit.

3. Security element according to Claim 1 or Claim 2, **characterized in that** the flexible sheet body (13, 58, 64, 72, 83, 94, 104, 114) is transparent **in that** region that surrounds the electronic circuit (21).

4. Security element according to one of Claims 1 to 3, **characterized in that** in case a), the first and the second optically variable element (11, 12, 14, 54, 58, 63, 65, 71, 73, 92, 95, 102, 105, 111, 115) continue to at least regionally overlap.

5. Security element according to one of Claims 1 to 3, **characterized in that** in case b), transmissive regions of the first optically variable element (63, 73, 92) and reflective regions of the second optically variable element (65, 71, 95) overlap.

6. Security element according to Claim 4, **characterized in that** transmissive regions of the first optically variable element (63, 73, 92) and reflective regions of the second optically variable element (65, 71, 95) overlap.

7. Security element according to one of Claims 1 to 3, **characterized in that** in case b), a further hidden optical effect becomes visible by superposition of the first and of the second optically variable element (71, 73, 93, 95, 102, 105, 111, 115).

8. Security element according to Claim 4, **characterized in that** a further hidden optical effect becomes visible by superposition of the first and of the second optically variable element (71, 73, 93, 95, 102, 105, 111, 115).

9. Security element according to either of Claims 7 and 8, **characterized in that** the first optically variable element has a Moiré analyser and the second optically variable element has a Moiré pattern.

10. Security element according to one of Claims 7, 8 and 9, **characterized in that** the first optically variable element (73) has a transmissive lens grid and the second optically variable element (71) has a reflective, diffractive structure or a print.

11. Security element according to one of Claims 7 to 10, **characterized in that** the first optically variable element (92) has a transmissive lens grid and the second optically variable element (95) has a reflective lens grid.

12. Security element according to one of Claims 7 to 11, **characterized in that** the first optically variable element (102, 111) has a first transmissive lens grid and the second optically variable element (105, 115) has a second transmissive lens grid.

13. Security element according to one of the preceding claims, **characterized in that** the first optically variable element (54, 63) has a partial reflection layer and a replication lacquer layer into which a diffraction-optically active relief structure (52, 62) is formed.

14. Security element according to one of the preceding claims, **characterized in that** the first optically variable element produces a transmissive diffraction-optical effect.

15. Security element according to one of the preceding claims, **characterized in that** the first and/or the second optically variable element (11, 12, 14) has a metallic reflection layer, and **in that** the RF antenna (22) is arranged outside that region in which the first and/or the second optically variable element is provided and in which the RF antenna and the first and/or the second optically variable element do not overlap **in that** manner.

16. Security element according to one of the preceding claims, **characterized in that** the first and/or the second optically variable element (54, 56, 63) have one or more printing layers, which preferably contain an effect pigment.

17. Security element according to one of the preceding claims, **characterized in that** the first and/or the second optically variable element have one or more thin-film layers for producing viewing angle-dependent colour shifts by means of interference.

18. Security document, in particular passport, having a security element according to one of the preceding claims.

19. Security document according to Claim 18, **characterized in that** the security document has one or more pages (37) which have an electrically conductive layer, which is arranged in the region of the RF antenna of the security element (33), for electromagnetically shielding the RF antenna.

20. Security document according to Claim 19, **characterized in that** one or more of the pages which have an electrically conductive layer arranged in the region of the RF antenna of the security element are provided with a third optically variable element, which displays a representation which is complementary with respect to the first and/or second optically variable element and/or at least regionally overlaps the first or the second optically variable element.

21. Security document according to one of Claims 18 to 20, **characterized in that** the security element (33) is attached to the last page (32) of the security document (3) and a transparent inspection window (36) is incorporated into the adjacent page (31) of the security document in register with the first optically variable element.

22. Security document according to Claim 18, **characterized in that** the security element is incorporated between two pages of the security document and is adhesively bonded to it, wherein a transparent inspection window is incorporated into the one and the other of these pages in register with the first or second optically variable element.

23. Security document according to Claim 18, **characterized in that** the security element forms a flexible sheet body in the form of a page of the security document, which sheet body is sewn into the security document as a page.

24. Security document according to one of Claims 18 to 23, **characterized in that** the security element (11) is attached to a page (18) of the security document and has a print (113) printed on it in the region of the RF antenna.

25. Security document according to one of Claims 18 to 24, **characterized in that** the first and/or the second optically variable element (82, 102, 105, 111, 115) overlap an individualized item of information that is attached to a page (85, 108, 118) of the security document.

## Revendications

1. Élément de sécurité identifiable par radiofréquence, l'élément de sécurité comportant un corps de film flexible (13, 58, 64, 83, 94, 104, 114), dans lequel sont intégrés un circuit électronique (21) configuré pour la mémorisation d'informations significatives pour la sécurité, et une antenne radiofréquence (22) qui est reliée au circuit électronique (21) et qui sert à une communication sans contact du circuit électronique avec un dispositif de contrôle, sachant que
sur une surface du corps de film flexible (13, 58, 64, 72, 83, 94, 104, 114) est fixé à demeure un premier élément optiquement variable (11, 12, 54, 63, 73, 82, 92, 102, 111) qui recouvre au moins par endroits la zone du corps de film flexible dans lequel est disposé le circuit électronique, sachant que sur l'autre surface du corps de film flexible (13, 58, 64, 72, 94, 104, 114) est fixé à demeure un deuxième élément optiquement variable (14, 56, 65, 71, 84, 95, 105, 115),
a) les effets optiques engendrés par le premier élément optiquement variable et par le deuxième élément optiquement variable montrent des représentations qui se complètent ou
b) le premier et le deuxième élément optiquement variable (11, 12, 14, 54, 58, 63, 65, 71, 73, 92, 95, 102, 105, 111,115) se recouvrent au moins par endroits.

2. Élément de sécurité selon la revendication 1, **caractérisé en ce**
**que** le circuit électronique est limité à la surface du corps de film flexible et en ce que le premier élément optiquement variable est fixé à demeure directement, au moins par endroits, sur le circuit électronique.

3. Élément de sécurité selon la revendication 1 ou la revendication 2,
**caractérisé en ce**
**que**, dans la zone entourant le circuit électronique (21), le corps de film flexible (13, 58, 64, 72, 83, 94, 104, 114) est transparent.

4. Élément de sécurité selon l'une quelconque des revendications 1 à 3,
**caractérisé en ce**
**que** dans le cas a), le premier et le deuxième élément optiquement variable (11, 12, 14, 54, 58, 63, 65, 71, 73, 92, 95, 102, 105, 111,115) continuent à se recouvrir au moins en partie.

5. Élément de sécurité selon l'une quelconque des revendications 1 à 3,
**caractérisé en ce**
**que** dans le cas b), des zones transmissives du premier élément optiquement variable (63, 73, 92) et des zones réfléchissantes du deuxième élément optiquement variable (65, 71, 95) se recouvrent.

6. Élément de sécurité selon la revendication 4, **caractérisé en ce**
**que** des zones transmissives du premier élément optiquement variable (63, 73, 92) et des zones réfléchissantes du deuxième élément optiquement variable (65, 71, 95) se recouvrent.

7. Élément de sécurité selon l'une quelconque des revendications 1 à 3,
**caractérisé en ce**
**que** dans le cas b), par superposition du premier et du deuxième élément optiquement variable (71, 73, 93, 95, 102, 105, 111, 115), un autre effet optique caché devient visible.

8. Élément de sécurité selon la revendication 4, **caractérisé en ce**
**que** par superposition du premier et du deuxième élément optiquement variable (71, 73, 93, 95, 102, 105, 111, 115), un autre effet optique caché devient visible.

9. Élément de sécurité selon l'une quelconque des revendications 7 ou 8,
**caractérisé en ce**
**que** le premier élément optiquement variable comporte un analyseur de moiré et le deuxième élément optiquement variable un motif de moiré.

10. Élément de sécurité selon l'une quelconque des revendications 7, 8 ou 9,
**caractérisé en ce**
**que** le premier élément optiquement variable (73) comporte un réseau de lentilles transmissif et le deuxième élément optiquement variable (71) une structure réfléchissante, diffractante ou une impression.

11. Élément de sécurité selon l'une quelconque des revendications 7 à 10,
**caractérisé en ce**
**que** le premier élément optiquement variable (92) comporte un réseau de lentilles transmissif et le deuxième élément optiquement variable (95) un réseau de lentilles réfléchissant.

12. Élément de sécurité selon l'une quelconque des revendications 7 à 11,
**caractérisé en ce**
**que** le premier élément optiquement variable (102, 111) comporte un premier réseau de lentilles transmissif et le deuxième élément optiquement variable (105, 115) un deuxième réseau de lentilles transmissif.

13. Élément de sécurité selon l'une quelconque des revendications précédentes,
**caractérisé en ce**
**que** le premier élément optiquement variable (54, 63) comporte une couche partielle de réflexion et une couche de laque de réplication dans laquelle est moulée une structure en relief (52, 62) à activité de diffraction.

14. Élément de sécurité selon l'une quelconque des revendications précédentes,
**caractérisé en ce**
**que** le premier élément optiquement variable produit un effet de diffraction optique transmissive.

15. Élément de sécurité selon l'une quelconque des revendications précédentes,
**caractérisé en ce**
**que** le premier et/ou le deuxième élément optiquement variable (11, 12, 14) comporte une couche de réflexion métallique et en ce que l'antenne radiofréquence (22) est disposée en dehors de la zone dans laquelle sont prévus le premier, respectivement le deuxième élément optiquement variable et qu'ainsi, l'antenne radiofréquence et le premier, respectivement le deuxième élément optiquement variable ne se recouvrent pas.

16. Élément de sécurité selon l'une quelconque des revendications précédentes,
**caractérisé en ce**
**que** le premier et/ou le deuxième élément optiquement variable (54, 56, 63) comportent plusieurs couches imprimées, contenant de préférence un pigment à effet.

17. Élément de sécurité selon l'une quelconque des revendications précédentes,
**caractérisé en ce**
**que** le premier et/ou le deuxième élément optiquement variable comportent une ou plusieurs couches de film mince pour la production de décalages chromatiques par interférence en fonction de l'angle d'observation.

18. Document de sécurité, en particulier passeport, avec un élément de sécurité selon l'une quelconque des revendications précédentes.

19. Document de sécurité selon la revendication 18, **caractérisé en ce**
**que** le document comporte une ou plusieurs pages (37) qui comportent une couche électriquement conductrice disposée dans la zone de l'antenne radiofréquence de l'élément de sécurité (33) pour le blindage électromagnétique de l'antenne radiofréquence.

20. Document de sécurité selon la revendication 19, **caractérisé en ce**
**qu'**une ou plusieurs des pages comportant une couche électriquement conductrice disposée dans la zone de l'antenne radiofréquence de l'élément de sécurité sont dotées d'un troisième élément optiquement variable qui montre une représentation complémentaire au premier et/ou au deuxième élément optiquement variable et/ou recouvre au moins par endroits le premier et/ou le deuxième élément optiquement variable.

21. Document de sécurité selon l'une quelconque des revendications 18 à 20,
**caractérisé en ce**
**que** l'élément de sécurité (33) est apposé à la page arrière (32) du document de sécurité (3) et en ce qu'une fenêtre d'inspection transparente (36), exactement ajustée au premier élément optiquement variable, est pratiquée dans la page adjacente (31) de l'élément de sécurité.

22. Document de sécurité selon la revendication 18, **caractérisé en ce**
**que** l'élément de sécurité est disposé entre deux pages du document de sécurité et est collé à ce dernier, une fenêtre d'inspection transparente exactement ajustée au premier ou au deuxième élément optiquement variable étant pratiquée dans l'une et dans l'autre de ces pages.

23. Document de sécurité selon la revendication 18, **caractérisé en ce**
**que** l'élément de sécurité forme un corps de film flexible, de la forme d'une page du document de sécurité, qui est cousu comme page dans le document de sécurité.

24. Document de sécurité selon l'une quelconque des revendications 18 à 23,
**caractérisé en ce**
**que** l'élément de sécurité (11) est apposé sur une page (18) du document de sécurité et est recouvert d'une impression (113) dans la zone de l'antenne radiofréquence.

25. Document de sécurité selon l'une quelconque des revendications 18 à 24,
**caractérisé en ce**
**que** le premier et/ou le deuxième élément optiquement variable (82, 102, 105, 111, 115) recouvrent une information individualisée placée sur une page (85, 108, 118) du document de sécurité.
